(19) 

Europäisches
Patentamt
European
Patent Office
Office européen
des brevets

(11) **EP 2 863 514 A1**

(12) **EUROPEAN PATENT APPLICATION**

(43) Date of publication:
**22.04.2015 Bulletin 2015/17**

(51) Int Cl.:
*H02J 7/00* (2006.01)

(21) Application number: **13189218.4**

(22) Date of filing: **18.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Iveco France S.A.
69200 Vénissieux (FR)**

(72) Inventor: **Codron, Stéphane
69008 Lyon (FR)**

(74) Representative: **Franzolin, Luigi et al
Studio Torta S.p.A.
Via Viotti, 9
10121 Torino (IT)**

(54) **Onboard installation and method for providing/collecting electric power and automotive vehicle equipped with such an installation**

(57)    This onboard installation (6-20) is for providing electric power (P) to electric loads (30-36) and collecting power from electric generators (4) of an automotive vehicle (2), the electric loads and generators being connected to a power line (6). The installation includes several independent batteries (10) connected in parallel to the power line (6), one DC/DC converter (16) per battery, the DC/DC converter being connected between battery cells (12) of the battery and the power line, and control means (17) integrated within each DC/DC converter for controlling electric power transfer from the battery cells (12) to the power line (6) and from the power line to the battery cells according to a control scheme. Supervising means (20) are provided for adapting ($S_{20}$) the control schemes of the DC/DC converters (16) on the basis of the respective states of charge of the batteries (10).

FIG.1

EP 2 863 514 A1

**Description**

This invention relates to an onboard installation for providing electric power to electric loads and collecting power from electric generators of an automotive vehicle. Such an installation is needed to feed the electric motors of an automotive vehicle such as a bus with electric power, when motors need to drive the wheels in order to accelerate the vehicle or to keep it at a constant speed. Such an installation is also needed when the vehicle decelerates, which induces that the electric motors work as generators and send electric power on a main power line of the vehicle, this electric power being transmitted to a battery which stores it and delivers it when the motors or some auxiliary equipments of the vehicle need electric power, afterwards.

A single battery is generally used and it is connected on a main power line of the vehicle, sometime called control area network. When the cells of the battery are directly connected to the power line, the battery must absorb all the electric power injected on the power line by the motor wheels working as generators when the vehicle decelerates. For safety reasons, the tension on the power line and on the battery should be kept below a given value which might be exceeded in some case. This induces a safety disconnection of the battery with respect to the power line. Under such circumstances, some of the electric power injected by the motors working as generators is lost.

In order to ameliorate this situation, one could consider incorporating a DC/DC converter in the battery, or between the battery and the main power line, in order to connect the battery cells to the power line. Considering the actual power level in an automotive vehicle, such as a mass transit passenger vehicle, this converter should be capable of handling power transfers up to a level of 320 Kilowatts (kW) or more. Such a converter would be heavy, bulky and elaborate, thus expensive.

Moreover, irrespective of whether or not such a converter would be used, in case of a default on one battery cell, the whole battery is out of order, which annihilates any possibility of evacuating energy through the battery during a deceleration phase of the vehicle. Thus, in case of default of one of the battery cells, all electric motors must be switched off and one must rely on the mechanical break system of the vehicle. This is potentially dangerous and, in any case, uncomfortable for the passengers.

The invention aims at solving these problems with new onboard installation which optimizes electric power transfers between electric loads, electric generators and associated battery means.

To this end, the invention concerns an onboard installation for providing electric power to electric loads and collecting power from electric generators of an automotive vehicle, the electric loads and generators being connected to a power line. This installation includes several independent batteries connected in parallel to the power line and one DC/DC converter per battery, the DC/DC converter being connected between battery cells of the battery and the power line. Control means integrated within each DC/DC converter are used for controlling electric power transfer from the battery cells to the power line and from the power line to the battery cells, according to a control scheme. Moreover, supervising means are used for adapting the control schemes of the DC/DC converters on the basis of the respective states of charge of the batteries.

Thanks to the invention, since several independent batteries are connected in parallel to the power line, in case of default on one battery cell of one battery, the other batteries remain effective to collect the majority of the power injected on the power line by the electric motors of the vehicle, in particular during a deceleration phase of the vehicle. Thus, the motor brake function of the vehicle remains available, even if one of the cells of one battery is out of order. Moreover, since DC/DC converters are interconnected between the battery cells and the power line, one can have a different tension on the power line and on each battery. This is all the more interesting that some electric losses occur in some converters associated with the motors and/or generators of the vehicle, these electric losses increasing with the tension on the power line. On the other hand, electric losses are also generated by Joule effect. Thanks to the DC/DC converter used for each battery, one can master the electric losses on other parts of the vehicle, which depend on the tension and/or current as explained here-above, in order to optimize the state of charge of the battery cells. In particular, the DC/DC converter of each battery protects its battery cells in case of over-tension or under-tension on the power line. Since control means are integrated in the DC/DC converter, they are capable of reacting very quickly, at the level of the DC/DC converter, with a response time of about 0,1 millisecond (ms) without having to communicate with a remotely located supervising control unit, which can have a response time in the order of 100 ms. Moreover, since the supervising means adapt the control scheme of the respective DC/DC converters, they can optimize the respective states of charge of the batteries, in order to keep the same state of charge in all batteries. This ameliorates power distribution within the vehicle and increases the life time of the batteries.

According to further aspects of the invention which are advantageous but not compulsory, such an installation might incorporate one or several of the following features:

-    At least two batteries are different and the control schemes used for these two batteries are different.
-    The two different batteries are of two different types.
-    At least one battery is based on super capacitor technology.

EP 2 863 514 A1

- The onboard installation includes means to provide the supervising means with an electric signal representative of the state of charge of each battery and the supervising means include means for comparing the respective states of charge of the batteries.

The invention also relates to an automotive vehicle, in particular a mass transit passenger vehicle, equipped with an onboard installation as mentioned here-above.

Finally, the invention relates to a method for controlling such an onboard installation and, more specifically, to a method for controlling an onboard installation for providing electric power to electric loads and collecting power from electric generators of an automotive vehicle, the electric loads and generators being connected to a power line, this method being **characterized in that** it includes at least the following steps:

- a) using several independent batteries connected in parallel to the power line and having each a DC/DC converter connected between battery cells of the battery and the power line,
- b) collecting information with respect to the state of charge of each battery,
- c) controlling electric power flowing through each DC/DC converter, from the battery cells to the power line and from the power line to the battery cells, according to a control scheme dedicated to this DC/DC converter,
- d) comparing the respective states of charge of the batteries,
- e) adapting the control scheme used in step c) for at least one DC/DC converter, on the basis of the result of the comparison of step d).

According to further advantageous aspects of the invention, such a method might incorporate one or several of the following features, taken in any technically admissible combination:

- Each control scheme is defined by a curve (C, C1, C2, C3, C4, C5) which represents the recovered/supplied power as a function of the tension on the power line.
- At step e), the control scheme is adapted to reduce any difference detected at step d) between the respective states of charges of the batteries.
- Each control scheme is defined by several parameters, including at least one threshold tension value and a variation coefficient between the tension on the power line and the power flowing through the DC/DC converter, and step e) consist in changing the value of at least one of these parameters.
- At step e), the threshold tension values of the control scheme used for the respective DC/DC converters are adapted so that a given action, based on the threshold tension value, is accomplished by all DC/DC converters for the same tension on the power line.
- In step a), one uses at least two different batteries and the variation coefficients of the control schemes used in step c) for the DC/DC converters of these two batteries are different.
- For a given level of total power going through the DC/DC converters of all batteries, the individual power going through the DC/DC converters of the two different batteries are different.

The attached claims form an integral part of the present description.

The invention will be better understood on the basis of the following description which is given in correspondence with the annexed figures and as an illustrative example, without restricting the object of the invention. In the annexed figures:

- figure 1 is a schematic representation of an installation according to the invention,
- figure 2 is a schematic representation of a control scheme used in a method for controlling a DC/DC converter of the installation of figure 1,
- figure 3 is a view similar to figure 1 showing two control schemes corresponding to two DC/DC converters in the installation of figure 1,
- figure 4 is a schematic view similar to figure 1 for an installation according to a second embodiment of the invention and
- figure 5 is a representation similar to the lower left part of figure 3 for the installation of figure 4.

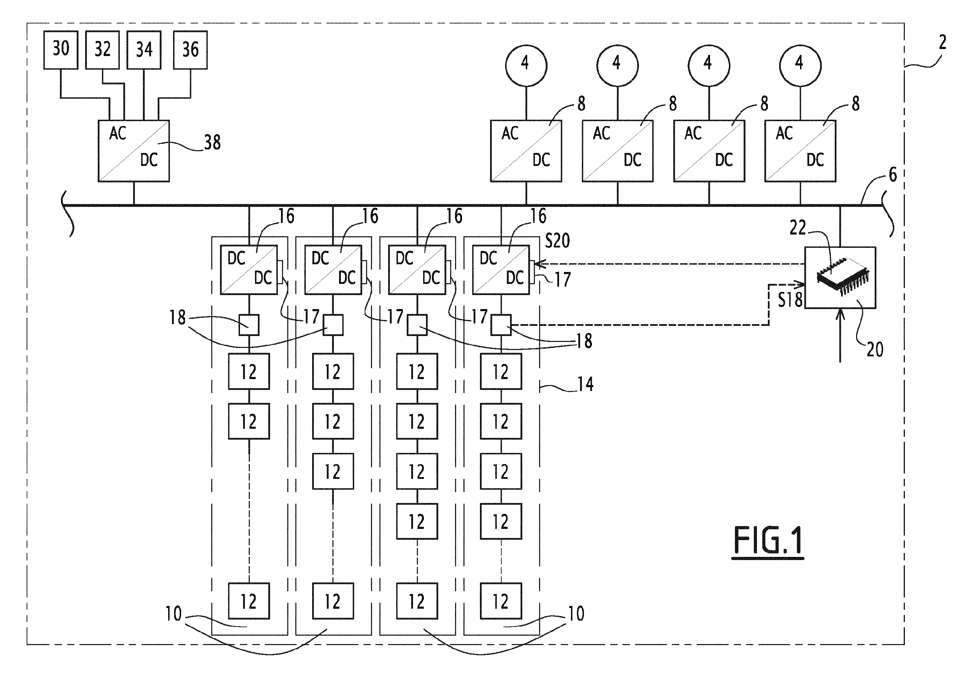

A bus 2 is schematically represented on figure 1 and includes four moto-generators 4, each capable of driving a wheel of bus 2. Each moto-generator 4 works as a motor when the wheels of the bus must be positively driven, for instance in order to accelerate bus 2 or to keep it at a constant speed on an uphill going slope. Moto-generators 4 work as generators when the bus decelerates or when it goes downhill.

Bus 2 also includes a power line 6 which can be formed by a dedicated power line or by a control area network or CAN of bus 2. Each moto-generator 4 is connected to power line 6 through a respective AC/DC converter 8. Each set of one moto-generator 4 and one AC/DC converter 8 is connected, in parallel to the other sets, to power line 6.

3

On the other hand, four batteries 10 are connected in parallel to power line 6. Batteries 10 are independent from each other. In particular, they do not share any component. Each battery 10 includes several battery cells 12 which can be based on any technology, e.g. including lead or lithium. Each battery cell has a nominal working tension, a maximum working tension and a minimum working tension. In the case of a lithium based battery cell, these tensions are respectively 3,2 volts (V), 3,35 V and 2,7 V. The output tension of each battery cell depends on its state of charge or SOC and is between its maximum tension value and its minimum tension value. Battery cells 12 of one battery 10 are connected in series and located within a casing 14. The number of battery cells of the batteries 10 is chosen in order to define the nominal tension value of a battery 10, according to the nominal tension on power line 6.

Each battery 10 also includes a DC/DC converter 16 and a communication module 18. Converter 16 and communication module 18 are located within casing 14. Alternatively, items 16 and 18 can be separated from the corresponding battery 10. In such a case, they are located outside casing 14.

A main or central electronic control unit or ECU 20 is also connected to power line 6.

Some auxiliary equipments are also mounted onboard bus 2 and include a heating system 30, an air conditioning system 32, a power steering system 34 and an air compressor system 36. Systems 30 to 36 are connected to power line 8 via an AC/DC converter 38.

Each DC/DC converter 16 includes a controller 17 capable of controlling electric power transfers from power line 6 to battery cells 12 of the associated battery 10 and from battery cells 12 to power line 6.

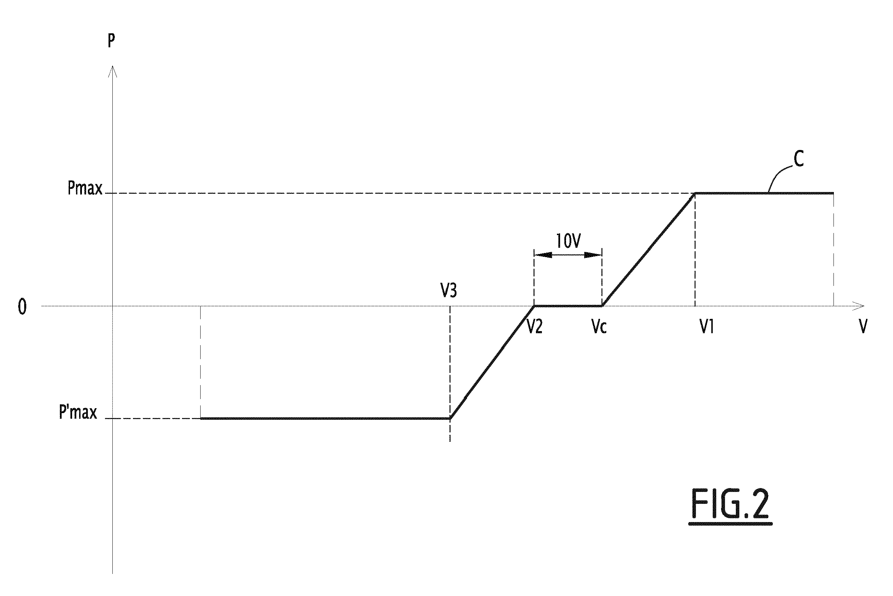

To fulfil this function, controller 17 uses a control scheme as shown by bold curve C on figure 2 where V represents the tension on power line 6, that is a tension of the traction chain formed by moto-generators 4. Tension V is represented on the abscise axis of figure 2. The electric power P transferred between moto-generators 4 and batteries 10 is represented on the ordinates axis. When this power P is positive, some electric power is recovered by batteries 10 from moto-generators 4; when this power is negative, some electric power is supplied by batteries 10 to moto-generators 4 and/or to systems 30 to 36.

When bus 2 decelerates or goes downhill, moto-generators 4 work as generators and inject some electric current onto power line 6. This current increases the tension on line 6. One considers a commutation tension Vc set for instance equal to 600 V. The control scheme represented on figure 2 by bold curve C is defined so that power is recovered into batteries 10, that is electric current flows from power line 6 to battery cells 12, if the tension V on power line 6 is above commutation tension Vc. Curve C is a recovered/supplied power P curve as a function of the tension V on power line 6. The maximum power $P_{max}$ recovered by one battery is equal to 80 kW, so that the set of four batteries used in the installation represented on figure 2 allows to recover a maximum of 320 kW. The maximum power $P_{max}$ of 80 kW is recovered when the tension V on power line 6 is above a first threshold value V1, for instance equal to 630 V. Between tensions Vc and V1, the recovered power increases linearly between 0 and the maximum value $P_{max}$ of 80 kW. Between tensions Vc and V1, the recovered power P for a tension V can be expressed as $P = A \times (V-Vc)$ where A is a constant coefficient equal to $P_{max}/(V1-Vc)$ which represents the slope of the bold curve C between tensions Vc and V1 on figure 2.

One considers a second tension V2 equal to Vc minus 10 V. In other words, the difference between tension Vc and V2 is set to 10 V on figure 2. If Vc equals 600 V, then V2 equals 590 V.

If the tension on power line 6 is below tension V2, some electric power needs to be provided by the batteries 10 to the moto-generators 4 which, in that case, work as motors. Actually, if moto-generators 4 work as motors, they draw electric power from power line 6, which decreases tension V. When this tension goes below value V2, then the control scheme of figure 2 provides that some power is supplied to power line 6 by batteries 10, which means that the electric power P is negative. The maximum power $P_{max}$ supplied by one battery 10 to power line 6 is set to 80 kW. Thus, in total, the four batteries 6 can supply up to 320 kW to power line 6, in particular to moto-generators 4. One considers a tension value V3 equal to 560 V. $P'_{max}$ denotes the maximum electric power supplied by a battery 10 to power line 6. Its value is set to 80 kW. Alternatively, the absolute value of $P'_{max}$ can be set different from the one of $P_{max}$.

Between tensions V2 and V3, the supplied power varies linearly as a function of the difference between the tension V and tension V2. B denotes the slop of the bold curve C on figure 2, between tensions V3 and V2.

A control scheme similar to the one represented on figure 2 by curve C is used by each controller 17 in order to pilot the corresponding DC/DC converter 16.

One notices on figure 2 that, when tension V on power line 6 is between V2 and the commutation tension Vc, no power is transferred between batteries 10 and power line 6, since P equals zero. In other words said curve C comprises a "silent" portion V2, VC, wherein a variation of tension does not involve any energy flowing through the DC/DC converters.

Since controller 17 is integrated within DC/DC converters 16, they can have a very small response time, in the order of 0,1 ms, which allows DC/DC converters 16 to switch quickly, depending on tension V, from a first configuration where they allow electric power to be recovered from power line 6 to batteries 10 to a second configuration where they allow electric power to be supplied from batteries 10 to power line 6 and, from there, to moto-generators 4 and/or auxiliary equipment 30 to 36. In particular, one does not have to rely on the communication between DC/DC converters 16 and main ECU 20 which would make the process much slower, with a response time of about 100 ms.

The four DC/DC converters 16 cannot be fully homogenous because their components have tolerances and because of their aging process.

This implies that the curve C which represents the theoretical control scheme on figure 2 might be different from one DC/DC converter 16 to the other.

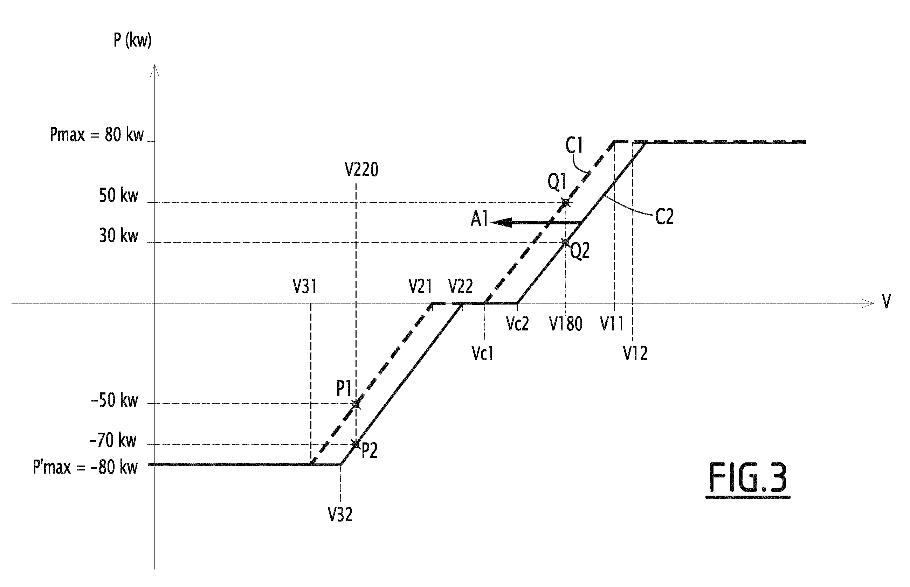

This is shown on figure 3 where curve C1 represents the control scheme followed by the first three batteries 10 on the left of figure 1, whereas curve C2 represents the control scheme followed by the fourth battery on the right of figure 1. On figure 3, tensions similar to tensions Vc, V1, V2 and V3 are respectively denoted Vc1, V11, V21 and V31 for curve C1, Vc2, V12, V22 and V32 for curve C2. Curve C1 is identical to curve C on figure 2. Curve C2 is offset of curve C1 by two volts. In other words, curve C2 corresponds to the case where commutation tension Vc equals 602 V.

Consider the case where all batteries 10 are initially charged at 80% of their maximum capacity, that is have the same state of charge equal to 80%. Consider that moto-generators 4 require an electric power P of 220 kW. When moto-generators 4 require this power from power line 6, the tension on power line 6 drops up to a tension V220 on figure 3, which is about 575 V. As can be deduced from the left part of figure 3, in the inclined portions of curves C1 and C2, a difference of about 20 kW exists between curves C1 and C2. A shown on figure 3, tension V220 corresponds to a supplied power of 50 kW on curve C1 as shown by point P1, it corresponds to a supplied power of 70 kW on curve C2, as shown by point P2.

In this example, the total power of 220 kW is obtained by 50 kW provided by each of the first three batteries on the left of figure 1 and 70 kW provided by the fourth battery on the right of figure 1, according to the following equation:

$$P = 3 \times 50 \text{ kW} + 70 \text{ Kw} = 220 \text{ kW}$$

After some time in this configuration, the state of charge SOC of the fourth battery, will be lower than the states of charge in the first three batteries.

Now, one considers that, after several minutes in an acceleration mode where power has been supplied from batteries 10 to moto-generators 4, bus 2 starts to decelerate and moto-generators 4 restitute a power of 180 kW, which induces an increase in tension V which takes a value $V_{180}$ of about 620 V. In that case, the power recovered on the three first batteries is, as shown by point Q1 on curve C1 equal to 50 kW, whereas the power recovered by the fourth battery is, as shown by point Q2 on curve C2, equal to 30 kW.

Thus, the least charged battery, that is the fourth battery 10, recovers less power from power line 6. This implies that, as time goes by, the offset between the states of charges of the first three batteries and the fourth battery increases.

In order to avoid this situation, main ECU 200 is capable of readjusting curves C1 and C2 when appropriate.

Each module 18 sends to ECU 20 an electronic signal $S_{18}$ representative of the state of charge or SOC of the corresponding battery 10. This is represented only for the fourth battery 10 on figure 2, for the sake of simplicity. Actually, signal $S_{18}$ goes through a dedicated electric line. It can also be transmitted wirelessly.

Thus, electronic control unit 20 is aware of the respective states of charges of the four batteries 10. ECU includes means, such as a microprocessor 22, to compare the states of charge of the different batteries on the basis of signals $S_{18}$ received from their respective modules 18. If ECU 20 detects a difference in the states of charges of the batteries, it is possible for it to send to the corresponding controllers 17 an electronic signal $S_{20}$, also represented only for the fourth battery 10 on figure 1. This signal $S_{20}$ includes some information to shift the commutation tension Vc in a way more favourable for the equi-repartition of the states charge of the different battery. Signal $S_{20}$ goes through the same electric line as signal $S_{18}$, or via another line. It can also be transmitted wirelessly.

Coming back to the example of figure 3, when ECU 20 detects a substantial difference between the states of charges of the respective batteries 10, e.g. more than 10%, that is when the state of charge of the fourth battery is lower than more than 10% to the state of charge of the other three batteries, then ECU 20 sends a control signal $S_{20}$ to the controller 17 of the fourth battery to decrease the value of the commutation tension Vc for this battery. This will « move » curve C2 to the left of figure 3, in the direction of arrow A1, closer to curve C1, or even to the left of curve C1, in order to compensate for the difference between the states of charges of the batteries.

Preferably, ECU20 can be set to react to a difference between the respective states of charges of the batteries 10 equal to 5% or less.

For example, curve C2 can be shifted by 2 volts to the left, so that the value Vc for all control schemes of all batteries 10 equals 600 V. Thus, all converters 16 transfer electric power from power line 6 to batteries 10 as soon as tension V is above 600 V.

According to another approach, it is also possible for ECU 20 to change the slopes of the inclined portions of curves C1 and/or C2, that is to work on the values of coefficients A and B, as defined with respect to figure 2.

According to still another approach, it is possible for ECU 20 to change values V11, V12, V21, V22, V31 and/or V32.

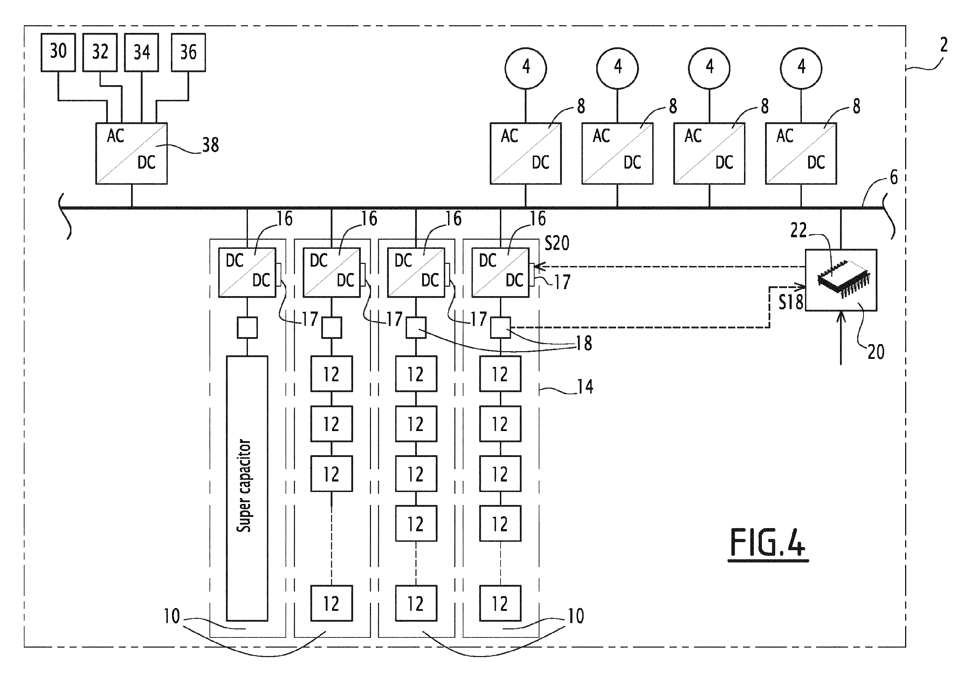

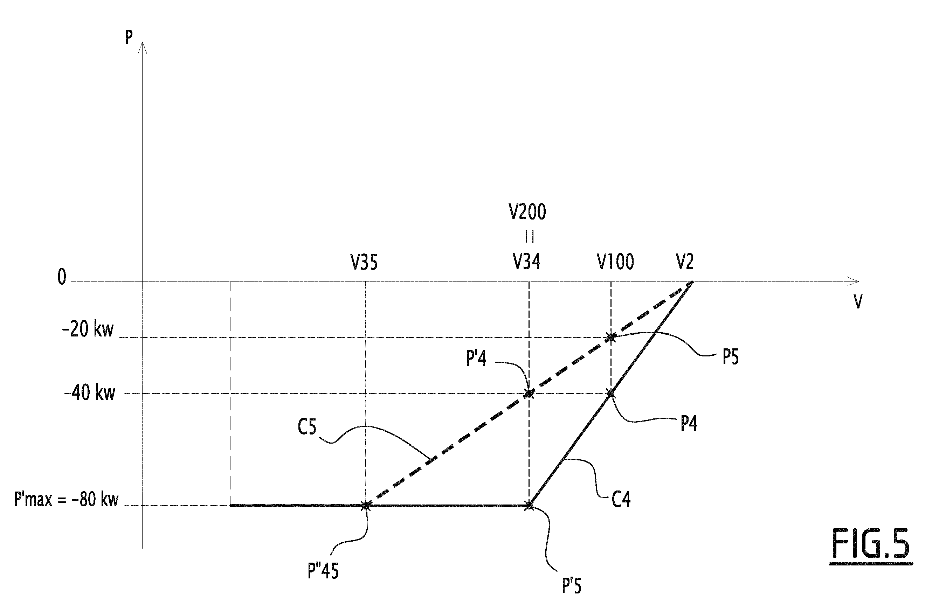

In the second embodiment of the invention represented on figures 4 and 5, elements similar to the ones of the first embodiment have the same references. Hereafter, only the differences with the first embodiment are mentioned.

In this embodiment, the first battery 10 on the left is based on a super-capacitor technology, whereas the other three batteries 10 are based on a lithium technology. The first battery is capable of supplying a higher power than the other three batteries.

Coming now to figure 5, curve C4 represents the control scheme used for the first battery 10 when power is supplied from this battery to power line 6, whereas curve C5 represents the control scheme used for the other three batteries. One notices that the slope of curve C4 is steeper than the slope of curve C5 in their respective inclined portions. In other words, starting from tension V2 as identified in figure 2, tension V34, which corresponds to tension V3 for curve C4, is higher than tension V35 which corresponds to tension V3 for curve V5.

Consider now the case where the tension V on power line 6 is at a value V100 which corresponds to the case where 100 kW have to be provided to batteries 10 to power line 6. At this level, the power recovered by the first battery 10 equals 40 kW, as shown by point P4 on curve C4, whereas the power recovered by each of the other three batteries equals 20 kW, as shown by point P5 on curve C5. Thus, the total power is obtained according to the following equation:

$$P = 40 \text{ kW} + 3 \times 20 \text{ kW} = 100 \text{ kW}$$

In case 200 kW are needed on power line 6, with a tension on power line 6 V200 which equals tension V34, then the tension delivered by the first battery equals 80 kW, as shown by point P'4 on curve C4, whereas the tension delivered by the other three batteries equals 40 kW, a shown by point P'5. The total power is according to the following equation:

$$P = 80 \text{ kW} + 3 \times 40 \text{ kW} = 200 \text{ kW}$$

When one needs 320 kW, that is a full power on power line 6, the tension on power line 6 equals tension V35 and all four batteries deliver 80 kW, as shown by point P"45 which belongs to curves C4 and C5.

Irrespective of the fact that the control scheme C4 and C5 used by the controllers 17 of the different batteries 10 are different by construction, they can be adapted by ECU 20 in order to minimize the differences between the states of charge of the respective batteries, as in the first embodiment.

This is all the more important that, because of their different technologies, the batteries 10 can be loaded with current having different intensities. In the example of figure 5, the steeper slope of curve C4 means that the super-capacitor battery 10 is more solicited than the other three batteries, which means that its state of charge decreases more quickly. On the contrary, its loading curve has also a steeper slope, which means that it is loaded more quickly. In other words, in the installation of figure 4, the super-capacitor 10 battery is more used than the other three batteries.

According to a non represented embodiment of the invention, an installation with batteries of different types can also include lead based batteries and lithium based batteries.

Irrespective of the embodiment considered, the fact of being able to adapt the control schemes represented by curves C, C1, C2, C4 and C5 of the batteries 10 depending on their actual states of charge allows to regularly distribute the charge between the batteries and to ensure a uniform aging of their respective cells 12 or equivalent equipments in case of a super capacitor battery.

The response time of the adjusting function obtained via ECU 20 and signals $S_{18}$ and $S_{20}$ is not as critical as the response time of controllers 17. For instance adjustment of control schemes can occur every 10 seconds, or every minute.

The embodiments and variants considered here-above can be combined in order to generate new embodiments of the invention. Further embodiments can be obtained by combining the present embodiments with the above-mentioned prior art features.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

All such changes, modifications, variations and other uses and applications which do not depart from the spirit and scope of the invention are deemed to be covered by this invention.

Further implementation details will not be described, as the man skilled in the art is able to carry out the invention starting from the teaching of the above description.

**Claims**

1. A method for controlling an onboard installation (6-20) for providing electric power (P) to electric loads (4, 30-36) and collecting power from electric generators (4) of an automotive vehicle (2), the electric loads and generators being connected to a power line (6), this method being **characterized in that** it includes at least the following steps:

   - a) using several independent batteries (10) connected in parallel to the power line (6) and having each a DC/DC converter (16) connected between battery cells (12) of the battery and the power line,
   - b) collecting ($S_{18}$) information with respect to the state of charge of each battery (10),
   - c) controlling electric power flowing through each DC/DC converter (16), from the battery cells (12) to the power line (6) and from the power line to the battery cells, according to control schemes (C, C1, C2, C4, C5) dedicated to respective DC/DC converter, wherein each control scheme is independent from each another,
   - d) comparing the respective states of charge of the batteries,
   - e) adapting ($S_{20}$) at least one control scheme used in step c) for at least one DC/DC converter (16), on the basis of the result of the comparison of step d).

2. A method according to claim 1, **characterized in that** each control scheme is defined by a control curve (C, C1, C2, C3, C4, C5) which represents the recovered/supplied power (P) as a function of the tension (V) on power line (6).

3. A method according to claim 2, **characterized in that** said curve (C, C1, C2, C3, C4, C5) comprises a "silent" portion ((V21, VC1), (V2, VC)), wherein a variation of tension does not involve any energy flowing.

4. Method according to any of previous claim from 1 to 3, **characterized in that** at step e), the control scheme (C, C1, C2, C4, C5) is adapted to reduce (A1) any difference detected at step d) between the respective states of charges of the batteries (10).

5. Method according to claim 4, **characterized in that** such reduction is carried out by translating at least one control curve (C, C1, C2, C3, C4, C5) of a respective DC/DC converter towards lower tension values when the respective state of charge is lower with respect to the other states of charge of the other several independent batteries (10).

6. Method according to any of claims 1 to 5, **characterized in that** each control curve (C, C1, C2, C4, C5) is defined by several parameters (Vc, V1-V3, A, B), including at least one threshold tension value (Vc) and a variation coefficient (A, B) between the tension (V) on the power line (6) and the power (P) flowing through the DC/DC converter, and step e) consist in changing the value of at least one of these parameters.

7. Method according to claim 6, **characterized in that** at step e), the threshold tension value (Vc, Vc1, Vc2) of the control scheme (C, C1, C2, C4, C5) used for the respective DC/DC converters (16) are adapted so that a given action, based on the threshold tension value, is accomplished by all DC/DC converters for the same tension (V) on the power line (6) .

8. Method according to claims 6 and 7, **characterized in that** in step a), one uses at least two different batteries (10) and the variation coefficients (A, B) of the control schemes used in step c) for the DC/DC converters of these two batteries are different.

9. Method according to claims 3 and 6 and 7, one uses at least two different batteries (10) and the respective silent portions ((V21, VC1), (V2, VC)) are different.

10. Method according to claim 7, **characterized in that** for a given level of total power (P) going through the DC/DC converters of all batteries (10), the individual power going through the DC/DC converters of the two different batteries are different.

11. Computer program comprising computer program code means adapted to perform all the steps b - e of any of the claims 1 to 10, when said program is run on a computer.

12. A computer readable medium having a program recorded thereon, said computer readable medium comprising computer program code means adapted to perform all the steps b - e of any of the claims 1 to 10, when said program is run on a computer.

**13.** Onboard installation (6-20) for providing electric power (P) to electric loads (4, 30-36) and collecting power from electric generators (4) of an automotive vehicle (2), the electric loads and generators being connected to a power line (6), **characterized in that** it includes:

- several independent batteries (10) connected in parallel to the power line (6),
- one DC/DC converter (16) per battery, the DC/DC converter being connected between battery cells (12) of the battery and the power line (6),
- control means (17) integrated within each of several DC/DC converter for controlling electric power transfer from the battery cells (12) to the power line (6) and form the power line to the battery cells according to a control scheme (C, C1, C2, C4, C5), wherein each control means is independent from each another,
- supervising means (20) for collecting and comparing the respective states of charge of the batteries and for adapting ($S_{20}$) at least one control scheme for at least one DC/DC converter, on the basis of the result of the comparison.

**14.** Onboard installation according to claim 13, **characterized in that** said supervising means (20) are adapted to perform all the steps of any of the previous claims from 1 to 10.

**15.** Onboard installation according to claims 13 or 14, **characterized in that** at least two batteries (10) are different and the control schemes (C4, C5) used for these two batteries are different.

**16.** Onboard installation according to claim 15, **characterized in that** the two different batteries (10) are of two different types.

**17.** Onboard installation according to any preceding claim 13 - 16, **characterized in that** at least one battery (10) is based on super capacitor technology.

**18.** Onboard installation according to any preceding claim 13 - 17, **characterized in that** it includes means (18) to provide the supervising means with an electric signal ($S_{18}$) representative of the state of charge of each battery (10) and the supervising means (20) include means (22) for comparing the respective states of charge of the batteries.

**19.** Automotive vehicle (2), in particular mass transit passenger vehicle, equipped with onboard installation (6-20) according to any preceding claim 13 - 18.

FIG.1

FIG.2

EP 2 863 514 A1

FIG.3

FIG.4

EP 2 863 514 A1

Europäisches
Patentamt

European
Patent Office

Office européen
des brevets

# EUROPEAN SEARCH REPORT

Application Number

EP 13 18 9218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/274145 A1 (TADDEO STEPHEN RANDOLPH [US]) 1 November 2012 (2012-11-01) | 1,2,4, 8-19 | INV. H02J7/00 |
| Y | * paragraphs [0012], [0018], [0020], [0028], [0032], [0033], [0044], [0045], [0046]; figure 1 * | 3,5-7 | |
| X | US 2012/169291 A1 (ABE HIROYUKI [JP] ET AL) 5 July 2012 (2012-07-05) * figure 1 * | 1,13 | |
| X | JP 2009 011138 A (TOYOTA MOTOR CORP) 15 January 2009 (2009-01-15) * figure 1 * | 1,11-13, 18 | |
| Y | US 2005/080537 A1 (CAWTHORNE WILLIAM R [US] ET AL) 14 April 2005 (2005-04-14) * figure 13 * | 3,5-7 | |

TECHNICAL FIELDS
SEARCHED        (IPC)

H02J

The present search report has been drawn up for all claims

| Place of search | Date of completion of the search | Examiner |
|---|---|---|
| Munich | 19 May 2014 | Fraissé, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 18 9218

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2014

| Patent document cited in search report | | Publication date | Patent family member(s) | | Publication date |
|---|---|---|---|---|---|
| US 2012274145 | A1 | 01-11-2012 | NONE | | |
| US 2012169291 | A1 | 05-07-2012 | CN | 102577010 A | 11-07-2012 |
| | | | EP | 2487771 A1 | 15-08-2012 |
| | | | US | 2012169291 A1 | 05-07-2012 |
| | | | WO | 2011043172 A1 | 14-04-2011 |
| JP 2009011138 | A | 15-01-2009 | NONE | | |
| US 2005080537 | A1 | 14-04-2005 | US | 2005080537 A1 | 14-04-2005 |
| | | | US | 2007078580 A1 | 05-04-2007 |

EPO FORM P0459

For more details about this annex : see Official Journal of the European Patent Office, No. 12/82